# EUROPEAN PATENT APPLICATION

(11) **EP 2 482 243 A1**
(43) Date of publication of application: **01.08.2012**
(21) Application number: 11290066.7
(22) Date of filing: 31.01.2011
(51) Int. Cl.: G06Q 20/00, H04L 9/32

(54) **A payment transaction method and corresponding applications**

(71) Applicant: Alcatel Lucent, 75007 Paris (FR)
(72) Inventor: Mampaey, Marcel, 1090 Brussel (BE)
(74) Representative: Plas, Axel Ivo Michel

(57) **Abstract**

A payment transaction is to be executed between a user terminal (TU1; TU2; TU3) registered with a user provider and an agent terminal (TA1; TA2; TA3) registered with an agent provider. Prior to sharing transaction details, the user terminal (TU1; TU2; TU3) delegates verification of trust to the user provider and the agent terminal (TA1; TA2; TA3) delegates verification of trust to the agent provider. The user provider and the agent provider have a pre-established trusted relationship.

## Description

### Field of the Invention

The present invention generally relates to payment transactions between a user terminal, e.g. a mobile handset, and an agent terminal, e.g. a point-of-sales or PoS terminal. The payment transaction can be a cash deposit, e.g. to initiate a remittance scenario, a cash retrieval, e.g. at the receiver side of a remittance scenario, or a payment for goods or services, e.g. in a retail shop. The invention in particular concerns a secure method for such a payment transaction in situations where the user terminal and agent terminal cannot trust each other and/or the communication channels between user terminal and agent terminal cannot be trusted.

### Background of the Invention

Prior to a payment transaction, the user terminal and agent terminal have to trust each other. Usually, the user terminal and agent terminal will be provisioned by and registered with different providers, a user provider and an agent provider respectively, as a result of which they cannot authenticate each other validly. The user terminal may be malicious, the agent terminal may be malicious, and the communication channel between both devices, e.g. a Bluetooth connection, may be listened to by a malicious third party. The latter problem is known as eavesdropping. User data shared between the user terminal and agent terminal during such a transaction may be intercepted and used in later transactions, e.g. by using camera's to detect the user's PIN code entered at the agent's terminal. This type of fraud is known as skimming.

State of the art methods that enable a user terminal and agent terminal involved in a payment transaction to authenticate each other are inconsistent, fragmented, and as a consequence suffer from slow deployment. Proprietary systems from different providers require bank offices, parking lots, retail shops, etc. to be equipped with different infrastructure from different providers, based on magnetic cards, SMS technology, etc. Their technology is incompatible, and often requires dedicated protocols to be supported by the user terminal and agent terminal, for instance to be able to share encryption keys. As a result of the diverse, fragmented and incompatible technology, deployment of solutions for secure payment transactions is slow.

It is an objective of the present invention to disclose a method for payment transactions between a user terminal and agent terminal that overcomes the above identified shortcomings of state of the art solutions. In particular, it is an objective to disclose such method which can be used for any type of transaction, and for any type of user terminal or agent terminal. It is an objective of the present invention to allow all providers to be different thereby opening competition and enabling payment transactions of any type in a strongly fragmented market.

### Summary of the Invention

According to the present invention, the above identified shortcomings of the prior art are resolved through a payment transaction method between a user terminal registered with a user provider and an agent terminal registered with an agent provider as defined by claim 1, wherein prior to sharing transaction details, the user terminal delegates verification of trust to the user provider and the agent terminal delegates verification of trust to the agent provider, the user provider and the agent provider having a pre-established trusted relationship.

Thus, the basic idea underlying the current invention is to delegate the verification of trust to entities in the network that are able to fulfil this function and that have an ability to establish trust between each other. More precisely, the user terminal, e.g. a mobile handset, delegates verification of trust to the user provider, and the agent terminal, e.g. a PoS terminal, delegates verification of trust to the agent provider. Both providers may be different but trust each other, e.g. like large e-banking providers. According to the invention, the providers shall take responsibility to interact with and authenticate their respective customers, and the communication between user terminal and agent terminal can be designed such that a malicious entity may intercept it. Since there is no need to trust the agent terminal and the signalling between user terminal and agent terminal may be intercepted and replayed without damage, the method according to the invention based on delegation of trust to a highly trusted provider-provider interface, can be used in any type of payment transaction, independent of the user terminal technology and/or agent terminal technology. It also allows all providers to be different and so allows to open competition on the market and transactions to function in a strongly fragmented market.

As defined by claim 2, the payment transaction method according to the present invention preferably comprises the steps of:
- sending a first message from the user terminal to the agent terminal over a distrusted first connection, the first message containing a first encrypted portion and a non-encrypted portion comprising a temporary user identification whose usage is restricted to a single payment transaction, and a user provider identification;
- authenticating the agent terminal by an agent provider server;
- sending a second message from the agent terminal to the agent provider server over a secure second connection, the second message containing the first encrypted portion, the temporary user identification and the user provider identification;
- sending a third message from the agent provider server to a user provider server over a secure third connection, the third message comprising the first encrypted portion and the temporary user identification;
- decrypting the first encrypted portion by the user provider server thereby generating decrypted data;
- sending a fourth message from the user provider server to the user terminal over a secure fourth connection, the fourth message containing a second encrypted portion comprising at least part of the decrypted data;
- decrypting the second encrypted portion by the user terminal and verifying said at least part of the decrypted data; and
- authenticating the transaction by the user provider server.

Thus, in the preferred embodiment of the invention, the user terminal initiates the payment transaction by sending a first message to the PoS terminal, or more generally the agent terminal. This payment transaction can be either a cash deposit from a user to an agent, a cash retrieval from an agent to a user, or a payment by a user for goods or services of an agent. The agent terminal cannot interpret the first message because it contains a first encrypted portion and a second non-encrypted portion of data in the clear that are not relevant to the agent terminal. The data in the clear at least contain a temporary user ID and the user provider's ID. A malicious terminal or party may intercept this first message but cannot do anything with the non-encrypted data: the temporary user ID shall not be valid in future transactions. Since the agent terminal cannot interpret the first message, it can only relay the first message to its own provider. Before doing so, the agent provider authenticates the agent terminal. The agent terminal-server relationship is supposed to be based on traditional legacy systems: they authenticate, then establish a secure connection, and thereupon start exchanging messages. The agent terminal hence sends a second message to an application correlation server or ACS of the agent's provider, i.e. a server that typically authenticates users and correlates actions like for instance getting money from the stored value account associated with the user. The second message contains at least the encrypted portion, the temporary user ID and the user provider's ID from the first message, and may contain additional information such as for instance a unique transaction reference number that is generated by the agent terminal. The agent's provider is able to exploit the information in the clear, find the user's provider and further relay the information to the user's provider over a trusted secure connection. The agent provider relays at least the temporary user ID and the encrypted first portion as part of a third message over a highly trusted provider-provider connection to an application correlation server or ACS of the user's provider. The user provider can decrypt the encrypted first portion and use the decrypted data to initiate an authentication procedure directly with the user terminal. This authentication shall typically involve encrypting part of or all data obtained by decrypting the first encrypted portion. These data will be encrypted such that the user terminal can decrypt them and verify the authenticity. The communication between the user provider and user terminal may take place over an available mobile network. As will be explained further in this patent application, the procedure to authenticate the transaction preferably shall be based on Alcatel Lucent's IBAKE mechanism. This mechanism is described for instance in US Patent Application 12/372242, US Patent Application 12/549932 and US Patent Application 12/549907, all incorporated herein by reference. Once the transaction is authenticated by the user provider, the payment transaction can be executed securely and the remainder of the transaction details can be shared between user terminal and agent terminal.

Preferably the user terminal uses a temporary ID agreed beforehand between the client application and server application and valid only for a single transaction. This provides optimal protection against eavesdropping and skimming where information intercepted by a malicious terminal or party would be used to trigger additional transactions.

Optionally, as defined by claim 3, the first message may further contain information indicative for an amount of money involved in said payment transaction.

Indeed, the amount involved in the transaction can be inserted in the first message by the user terminal or may be inserted by the agent terminal in the second message, and provides additional protection since this information may be displayed to and verified by the user upon receipt of the fourth message.

Also optionally, as defined by claim 4, the second message may contain an agent terminal identification.

Such agent terminal ID shall assist the agent provider to authenticate the agent terminal, hence providing additional protection against malicious mobile terminals that intercept the first message.The agent terminal adds this attribute to the relayed message in order to assist the user provider in verifying if the agent terminal is the one it claims to be.

According to another optional aspect, defined by claim 5, the third message may further contain location information of the agent terminal, and authenticating the transaction may involve verifying the location of the user terminal against the location information of the agent terminal.

Indeed, if the agent provider informs the user provider over the trusted provider-provider connection on the location of the agent terminal, the user provider can use this information to verify if the terminal's location at the point in time of the transaction corresponds with the agent terminal location. The location information may for instance consist in GPS coordinates or a cell identification of a cellular mobile network. If the location of the user handset does not match with the location of the agent terminal registered in the agent provider's system, then possible fraud is detected and the transaction shall be aborted.

Further optionally, as defined by claim 6, the third message may contain business descriptive information of an agent exploiting the agent terminal, and the fourth message may also contain this business descriptive information of the agent.

A description of the agent's business, e.g. a name, address, type of business such as banking, parking, etc., added by the agent provider to the third message shall provide an additional level of protection when relayed to the user via the fourth message since it is an additional parameter that can easily be displayed to and verified by the user before actually executing the transaction.

According to yet another optional aspect of the invention, defined by claim 7, the third message may further contain information indicative for a fee charged by the agent provider on the transaction, and the fourth message may further contain information indicative for the fee charged by the agent provider on the transaction and a fee charged by the user provider on the transaction.

Indeed, both the agent provider and the user provider may charge a fee on the transaction. Their individual fees, or the sum of their fees may be communicated to the user via the fourth message, such that the user can approve the total cost of the transaction before actually executing the transaction. If the user is not satisfied with the fee charged by the agent provider or user provider, he/she can still abort the transaction.

Optionally, as defined by claim 8, the first encrypted portion consists of an Identity Based Encryption generated using a public key of the user provider, the Identity Based Encryption further comprising a parameter aP generated by a random number a processed with a public parameter P that represents a known point on a known elliptic curve, and decrypting the first encrypted portion by the user provider server involves using a private key of the user provider.

Thus, the encrypted first portion shall typically be generated using the public key of a user provider's public/private key pair. Consequently, only the user provider shall be able to decrypt the encrypted first portion using his corresponding private key. Preferably, the user terminal authentication shall rely on Alcatel Lucent's IBAKE mechanism. Therefore, a secure application on the user terminal shall select a random number a and compute the parameter aP using a known point P on a known elliptic curve. The parameter aP shall be encrypted to form part of the encrypted first portion such that it can be retrieved by the user provider server through decryption. The user provider server can then further relay the parameter aP to the user terminal as part of the fourth message thereby enabling the user terminal to verify the authenticity of aP and thereby the authenticity of the user provider.

Further optionally, as defined by claim 9, the said second encrypted portion consists of an Identity Based Encryption generated using a public key of the user, the Identity Based Encryption comprising the parameter aP; and decrypting the second encrypted portion by the user terminal involves using a private key of the user for verification to thereby authenticate the user provider server by the user terminal.

This way, the fourth message can be used to let the user terminal authenticate the user provider server.

Further, in a preferred embodiment defined by claim 10, the second encrypted portion consists of an Identity Based Encryption generated using a public key of the user, the Identity Based Encryption further comprising a parameter bP generated by a random number b processed with a public parameter P that represents a known point on a known elliptic curve, and decrypting the second encrypted portion by the user terminal involves using a private key of the user.

Thus, the encrypted second portion shall typically be generated using the public key of the user's public/private key pair. Consequently, only the user shall be able to decrypt the encrypted second portion using his private key. When terminal authentication relies on Alcatel Lucent's IBAKE mechanism, a secure application on the user provider's server shall select a random number b and compute the parameter bP using a known point P on a known elliptic curve. The parameter bP shall be encrypted to form part of the encrypted second portion such that it can be retrieved by the user through decryption. The encrypted second portion must then contain the parameter aP such that the user terminal can verify the authenticity of the user provider after decrypting the second encrypted portion with the private user key.

As is further specified by claim 11, authenticating the user terminal by the user provider server in a preferred embodiment further involves sending a fifth message from the user terminal to the user provider server, the fifth message containing a third encrypted portion consisting of an Identity Based Encryption using a public key of the user provider, the Identity Based Encryption containing the parameter bP, and decrypting the third encrypted portion by the user provider server using a private key of the user provider for verification.

Indeed, the parameter bP decrypted from the fourth message by the user terminal, may be encrypted using the public key of a public/private key pair of the user provider. When sending back the encrypted parameter bP to the user provider, e.g. as part of a fifth message, the user provider shall be able to verify the correctness of the parameter bP and authenticate the user terminal.

In addition to a payment transaction method as defined by claim 1, the present invention also relates to a corresponding user terminal client application as defined by claim 12, a corresponding agent terminal client application as defined by claim 13, a corresponding user provider server application as defined by claim 14, and a corresponding agent provider server application as defined by claim 15.

The client application in the user terminal must be a trusted application that enables to generate the information to be shared with the agent terminal via the first message. This user terminal client application preferably is located on the SIM card and uses separated memory and processing resources in the terminal in a secure mode where no other transactions or processes simultaneously use these resources. The client application on the user terminal preferably supports the IBE protocol. The client application on the agent terminal has to receive and relay the first message transparently towards the agent provider's server. Such application can be deployed on existing agent terminals through a simple software upgrade. The server application for the agent provider enables to receive the second message and extract the user provider ID thereof. With knowledge of the user provider ID, the agent provider's application correlation server can contact the user providers' application correlation server over a highly trusted provider-provider connection, e.g. an inter-banking SWIFT connection. The user provider server application at last must also support the IBE protocol in order to be able to decrypt the encrypted portion of the message generated by the user terminal and authenticate the user terminal.

### Brief Description of the Drawings

Fig. 1 illustrates an embodiment of the method according to the present invention in a cash deposit scenario;

Fig. 2 illustrates an embodiment of the method according to the present invention in a cash retrieval scenario; and

Fig. 3 illustrates an embodiment of the method according to the present invention in a scenario of payment for goods at a retail shop.

### Detailed Description of Embodiment(s)

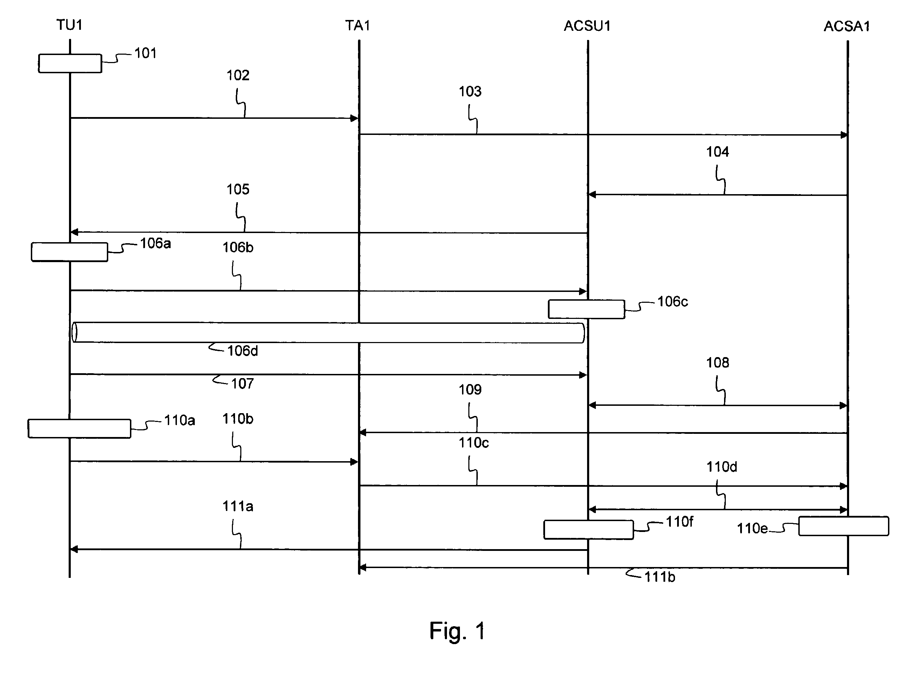

Fig. 1 shows the sequence of steps executed between a user terminal TU1, an agent terminal TA1, a user provider application correlation server ACSU1 and an agent provider application correlation server ACSA1 in the cash deposit part of a secure remittance scenario executed according to the present invention.

In the first step 101, a user goes to an agent location with some cash to be deposited for a remittance transaction. The proposed security scheme allows the user to remain anonymous at this point in time to protect his/her privacy. However, to enable financial fraud prevention, registration of the user's identity and financial transaction will take place further in the scenario. The user activates the payment application on his/her mobile handset TU1. It is assumed that the user's mobile terminal TU1 is Near Field Communications (NFC) enabled but other air interfaces can be used as well for the communication with the agent terminal TA1, e.g. Wi-Fi, Bluetooth, etc. The user selects the cash deposit action in the payment application on his/her handset TU1 and as a result the handset TU1 establishes an NFC-link with the agent's PoS terminal TA1. The proposed security scheme allows this channel to be relatively insecure so a strong NFC security is not mandatory. For example eavesdropping and identity theft does not need to be prevented at this stage because the stolen data cannot be re-used. Also, the user does not have to trust the agent at this stage but will receive confirmation later that the agent can be trusted. To preserve the user identity the handset TU1 uses a temporary user identification, t-user-ID, agreed beforehand between the user's application client and user provider application server. A secure element on the handset TU1 chooses a random number a and computes the parameter aP thereby using a public parameter P that represents a known point on a known elliptic curve. The handset TU1 generates a first message and sends this message to the PoS terminal TA1 as is indicated by arrow 102 in Fig. 1. The first message has the following content:
t-user-ID, ACSU1-ID, IBE (PUB-ACSU1, t-user-ID ∥ ACSU1-ID ∥ aP), amount

Herein:
- t-user-ID represents the temporary user identification valid during a single transaction;
- ACSU1-ID represents the public identification of the user provider;
- PUB-ACSU1 represents the public key of a public and private key pair of the user provider;
- aP represents the above defined parameter generated by the user terminal TU1;
- IBE represents an Identity Based Encryption of t-user-ID, ACSU1-10 and aP, generated using the public key PUB-ACSU1; and
- amount represents the amount of money the user wishes to deposit in the transaction.

The agent PoS terminal TA1 receives the first message but is not able to decrypt the encrypted portion thereof. Also the agent terminal TA1 cannot identify the user since t-user-ID is not meaningful to it, and t-user-ID cannot usefully be copied from the first message to perform fraud later since t-user-ID is a temporary identification that is valid only during a single transaction. It is assumed that the PoS terminal TA1 has already authenticated with and established a secure connection with the agent provider's application correlation server ACSA1 using for instance DH and 3DES. As is indicated by arrow 103 in Fig. 1, the PoS terminal TA1 relays the first message to the agent provider's ACS server ACSA1 as part of a second message. The content of this second message hence is:
t-user-ID, ACSU1-ID, IBE(PUB-ACSU1, t-user-ID || ACSU1-ID || aP), amount

The agent provider's ACS server ACSA1 has previously authenticated the PoS terminal TA1 as a legitimate one of its own network of agents. It identifies the PoS terminal TA1 through the identification PoS-ID. This PoS-ID matches in the ACSA1 database with a particular location, LOC, and with a particular business description, DESC, describing the agent's business, e.g. its name and address. Since ACSUL-ID is in the non-encrypted part of the second message, ACSA1 can identify the user provider's ACS server, ACSU1. It is assumed that ACSA1 has already established a highly trusted provider-provider connection with ACSU1 using for instance IPsec. ACSA1 reads the amount to be deposited to which corresponds a cost of transaction, fee-a. ACSA1 thereupon generates a third message and sends the third message to ACSU1 as is indicated by arrow 104 in Fig. 1. The content of this third message is as follows:
t-user-ID, ACSU1-ID, IBE(PUB-ACSU1, t-user-ID || ACSUL-ID || aP), amount, fee-a, LOC, DESC

Upon receipt of the third message, ACSU1 decrypts the message using its private key PR-ACSU1 that corresponds with public key PUB-ACSU1. ACSU1 also matches the t-user-ID as decrypted from the third message with the user's identity, phone number, and banking information, like for instance Stored Value Account (SVA) identification or other banking information that can be used in an international financial transaction and remains registered to prevent fraud like money laundering or terrorism financing. ACSU1 now accesses the mobile features in the mobile network operator's infrastructure. ACSU1 verifies that the user is reachable by mobile and that his/her location matches the agent's location LOC specified in the third message. If it does not match then a possible PoS terminal fraud is detected and the transaction is aborted. If the locations match, ACSU1 selects a random number b and computes parameter bP using the known point P on the known elliptic curve. ACSU1 adds its own fee on the transaction to fee-a which totals fee-t and sends a fourth message to the user as is indicated by arrow 105 in Fig. 1. The content of this fourth message is as follows:
t-user-ID, ACSU1-ID, IBE(PUB-user, t-user-ID || ACSU1-ID || aP || bP), amount, fee-t, DESC
Herein, PUB-user represents the public key of a private and public key pair of the user.

Upon receipt of the fourth message, the user handset TU1 decrypts the message using the private key PR-user in step 106a. The user terminal TU1 verifies the aP value decripted from the fourth message with the aP value it generated in step 101. If the received aP value is correct then the user provider's ACS server ACSU1 is validly authenticated. This fact also implies that the transaction is likely to operate normally as all players were able to contact each other, and that - by delegation of trust - the user may trust the agent. In addition the DESC, amount and fee-t attributes extracted from the fourth message can be displayed by the handset TU1 for verification by the user. The user can check the agent description, verify there is no fraud in the declared amount to be deposited, and can also check the fee that will be charged by the user provider and agent provider for the transaction. If the user is not satisfied with the fee or other attributes he/she can abort the transaction at this point in time. If the charged fee is acceptable to the user, the user will be asked to enter a PIN code. The client application that shall verify the PIN code must be installed securely on the user terminal TU1. If the PIN code matches the one securely stored, then the handset TU1 sends a fifth message to ACSU1 as is indicated by arrow 06b in Fig. 1. The content of this fifth message is as follows:
t-user-ID, ACSUL-ID, IBE(PUB-ACSU1, t-user-ID || ACSU-ID || bP)

ACSU1 is able to decrypt this fifth message using PR-ACSU1 in step 106c. If the bP value decrypted from the fifth message is correct then the user is validly authenticated by ACSU1 and his/her confirmation can be accepted. At this point in time, a secure association 106d has been established between the user and user provider.

Going forward, two possibilities exist. Either the application asks the user for the remainder transaction details, e.g. receiving user identity attributes, which the user could have prepared in advance, or the user could simply indicate "cash credit to my SVA account", as is indicated by arrow 107 in Fig. 1, since the remittance part is not relevant to ACSA1. The handset TU1 is also capable of calculating abP such that all subsequent communication with ACSU1 is encrypted in both directions with the shared key. This allows to securely transfer all information over the mobile network operator's infrastructure over possibly insecure communication channels and also prevents the need for expensive mobile network operator application level security infrastructures such as the Generic Bootstrapping Architecture (GBA). In fact the entire communication is secured at application level between user handset TU1 and ACSU1.

As is indicated by arrow 108, details of the transaction are transferred to both ACS servers, ACSU1 and ACSA1, such that all legally required identifications can be registered and the transaction can be prepared and verified.

A message is sent from ACSA1 to the agent's PoS terminal TA1 indicating that the user is validly authenticated and the cash deposit amount and fee are confirmed. This is indicated by arrow 109 in Fig. 1.

At this moment the user delivers the cash to the agent's terminal TA1, as is indicated by 110a and 110b in Fig. 1, and the agent confirms to ACSA1 in 110c that the cash is verified, e.g. no false currency, and that the amount is correct. ACSA1 confirms to ACSU1 in 110d. In 110e the agent SVA account is debited as it received the cash, and the user SVA is credited in 110 f after fee deduction.

When the ACSA1-ACSU1 SVA transfer is successful, ACSU1 sends a confirmation to the user as is indicated by arrow 111a, and ACSA1 sends a confirmation to the agent as is indicated by arrow 111b such that the user knows it is successful and can leave the cash behind. If the monetary transfer would fail for whatever reason both user and agent are informed such that the agent can let the user leave the shop with the cash.

As a result of a successful transfer ACSU1 will also produce a transaction number and a code that can be sent securely to the receiving user in the remittance scenario to allow retrieving the cash. The process followed according to the present invention to collect the cash will be described in the following paragraphs.

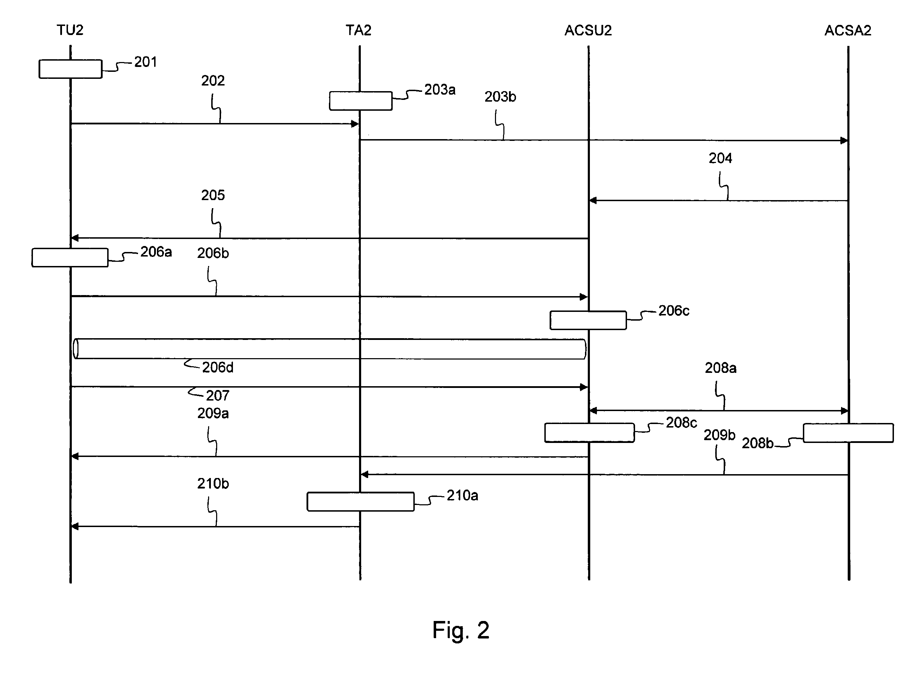

Fig. 2 shows the sequence of actions and exchanged messages in an embodiment of the method according to the present invention executed by the receiving user for cash retrieval in a remittance scenario.

The receiving user having a mobile handset TU2 goes to an agent location to retrieve cash from a remittance deposit on his/her SVA. The transaction has a reference Ref and a retrieval confirmation code Code. The security scheme according to the invention allows the user to remain anonymous at this point in time in order to protect his/her privacy. Contrary to existing remittance solutions, the user does not have to prove his/her identity with a passport or identity card. However, to enable financial fraud prevention, registration of the user's identity and financial transaction will take place later in the scenario.

In step 201, the user activates the payment application on his/her mobile handset TU2. The user selects the cash retrieval action and as a result the handset TU2 establishes an NFC link with the agent's PoS terminal TA2. As is indicated by arrow 202 in Fig. 2, the handset TU2 sends a first message to the PoS terminal TA2. The content of this first message is as follows:
t-user-ID, ACSU2-ID, amount, IBE(PUB-ACSU2, t-user-ID || ACSU2-ID || aP || Ref)

Herein:
- t-user-ID represents the temporary user identification assigned to the receiving user and valid during the cash retrieval transaction only;
- ACSU2-ID represents the public identification of the user provider of the receiving user;
- PUB-ACSU2 represents the public key of a public and private key pair of this user provider;
- aP represents a unique parameter generated by the user terminal TU2;
- IBE represents an Identity Based Encryption of t-user-ID, ACSU2-ID and aP, generated using the public key PUB-ACSU2;
- amount represents the amount of money the user wishes to receive in the transaction; and
- Ref represents the reference to the remittance transaction, i.e. a transaction number.

It is noticed that the amount is already specified in the non-encrypted part of the first message such that the agent PoS terminal TA2 can immediately verify in step 203a if it has enough cash available to cash out.

The PoS terminal TA2 relays the first message to its agent provider ACS server ACSA2. The PoS terminal TA2 thereto generates the following second message and sends this second message to ACSA2 as is indicated by arrow 203b:
t-user-ID, ACSU2-ID, amount, IBE(PUB-ACSU2, t-user-ID || ACSU2-ID || aP || Ref)

As is indicated by arrow 204 in Fig. 2, ACSA2 relays the second message to the user provider ACS server ACSU2 as part of a third message whereto ACSA2 also adds the agent fee related to paying this amount, fee-a, the location LOC of agent terminal TA2 and a business description DESC of the agent. The third message hence looks as follows:
t-user-ID, ACSU2-ID, amount, fee-a, LOC, DESC, IBE(PUB-ACSU2, t-user-ID || ACSU2-ID || aP || Ref)

Upon receipt of the third message, ACSU2 decrypts the message using its private key PR-ACSU2, matches the attributes extracted from the third message with its database, and adds its own costs to fee-a which totals fee-t. ACSU2 thereupon generates and sends a fourth message to the user terminal TU2 with following content:
t-user-ID, ACSU2-ID, amount, fee-t, DESC, IBE(PUB-user, t-user-ID || ACSU2-ID || aP || bP || Ref)
This is indicated by arrow 205 in Fig. 2. Herein, PUB-user represents the public key of a private and public key pair of the receiving user.

The user handset TU2 decrypts the fourth message using its private user key PR-user. If the aP value decrypted from the fourth message is correct then the user provider ACS server ACSU2 is validly authenticated in step 206a. The user further verifies the displayed information in step 206a and the handset TU2 sends the following fifth message to ACSU2, as is indicated by arrow 206b in Fig. 2:
t-user-ID, ACSU2-ID, IBE(PUB-ACSU2, t-user-ID || ACSU2-ID || bP)

In step 206c ACSU2 is able to decrypt the message using the private key PR-ACSU2. If the bP value decrypted from this fifth message is correct then the user is validly authenticated.

So far, the procedure to establish a secure association 206d has been comparable to the procedure followed in the deposit scenario of Fig. 1 to establish the secure association 106d, and the exchanged messages have a comparable content.

At this point in time, the user can send the confirmation code Code, e.g. with following message:
IBE(abP, t-user-ID || ACSU2-ID || Ref || Code)
This is indicated by arrow 207 in Fig. 2.

Details of the transaction are transferred to both ACS servers, i.e. ACSU2 and ACSA2 as is indicated by 208a such that all legally required identifications can be registered and the transaction can be prepared and verified: existence of SVA accounts, etc. At this point in time, the agent SVA account in step 208b is credited as it delivers the cash and the user SVA is debited in step 208c.

Confirmations are sent to both the user and agent, as respectively indicated by arrows 209a and 209b in Fig. 2.

At last, denoted by 210a and 210b in Fig. 2 the agent delivers the cash.

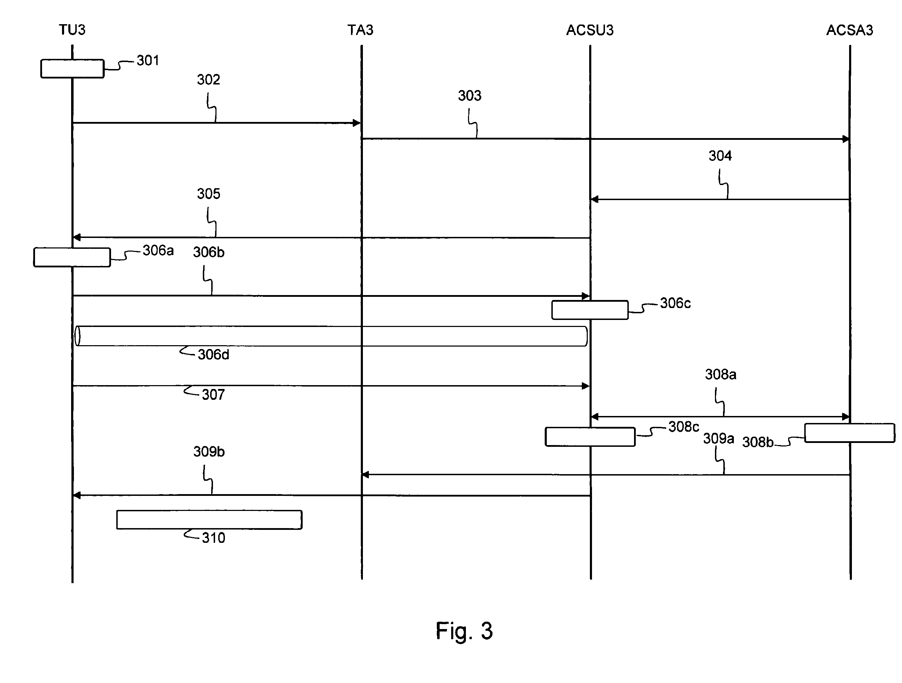

Fig. 3 at last illustrates the sequence of actions and exchange of messages in an embodiment of the present invention wherein a user is paying for goods at a retail shop.

In step 301, the user having a mobile handset TU3 goes to an agent location to buy goods with his/her SVA. The proposed security scheme allows the user to remain anonymous at this point to protect his/her privacy. The user activates the payment application on his/her mobile handset TU3. The user selects the payment of goods action and as a result the handset TU3 establishes an NFC link with the agent's PoS terminal TA3. As is indicated by arrow 302 in Fig. 3, the handset TU3 generates and sends a first message to the PoS terminal TA3 with following content:
t-user-ID, ACSU3-ID, IBE(PUB-ACSU3, t-user-ID || ACSU3-ID || aP)

Herein:
- t-user-ID represents the temporary user identification assigned to the goods buying user and valid during the sales transaction only;
- ACSU3-ID represents the public identification of the user provider selling the goods;
- PUB-ACSU3 represents the public key of a public and private key pair of this user provider;
- aP represents a unique parameter generated by the user terminal TU3;
- IBE represents an Identity Based Encryption of t-user-ID, ACSU3-ID and aP, generated using the public key PUB-ACSU3.

The PoS terminal TA3 relays the first message to the agent provider's ACS server ACSA3 and adds the amount. This is indicated by arrow 303 in Fig. 3. The content of the second message hence is as follows:
t-user-ID, ACSU3-ID, amount, IBE(PUB-ACSU3, t-user-ID || ACSU3-ID || aP) wherein amount represents the amount of money to be paid in the transaction for the goods.

ACSA 3 adds the agent fee related to this transaction, fee-a, the location LOC of the agent terminal TA3, and a business description DESC of the agent, and generates a third message that will be transmitted to the user provider's ACS server ACSU3, as is indicated by arrow 304. The content of the third message is as follows:
t-user-ID, ACSU3-ID, amount, fee-a, LOC, DESC, IBE(PUB-ACSU3,
t-user-ID || ACSU3-ID || aP)

Upon receipt of the third message, ACSU3 decrypts this third message using his private key PR-ACSU3. ACSU3 matches the attributes extracted from the third message with its database, and adds its own costs to fee-a which totals fee-t. Thereupon, ACSU3 generates and sends the following fourth message to the user:
t-user-ID, ACSU3-ID, amount, fee-t, DESC, IBE(PUB-user, t-user-ID || ACSU3-ID || aP || bP)
This is indicated by arrow 305 in Fig. 3. Herein, PUB-user represents the public key of a private and public key pair of the user buying the goods.

The user handset TU3 decrypts the fourth message using its private key PR-user. If the aP value is correct then ACSU3 is validly authenticated in step 306a. The user further verifies the displayed information in step 306a. As is indicated by arrow 306b, the handset TU3 sends a fifth message back to ACSU3 with following content:
t-user-ID, ACSU3-ID, IBE(PUB-ACSU3, t-user-ID || ACSU3-ID || bP)

ACSU3 is able to decrypt the fourth message in step 306c using its private key PR-ACSU3. If the bP value extracted from the fourth message is correct then the user is validly authenticated.

So far, the procedure to establish a secure association 306d has been comparable to the procedure followed in the deposit scenario of Fig. 1 to establish the secure association 106d, and the exchanged messages have a comparable content.

At this point in time, the user can confirm the purchase, as is indicated by arrow 307.

Details of the transaction are transferred to both ACS servers, i.e. ACSU3 and ACSA3 such that all legally required identifications can be registered and the transaction can be prepared and verified: existence of SVA accounts, etc. This is indicated by arrow 308a in Fig. 3. At this point in time, the agent SVA account is credited in step 308b as it delivers the goods and the user SVA is debited in step 308c.

A confirmation is sent to both the agent and user, as respectively indicated by arrows 309a and 309b in Fig. 3.

The agent lets the user leave with the goods in step 310.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A payment transaction method between a user terminal (TU1; TU2; TU3) registered with a user provider and an agent terminal (TA1; TA2; TA3) registered with an agent provider,
**CHARACTERIZED IN THAT** prior to sharing transaction details, said user terminal (TU1; TU2; TU3) delegates verification of trust to said user provider and said agent terminal (TA1; TA2; TA3) delegates verification of trust to said agent provider, said user provider and said agent provider having a pre-established trusted relationship.

2. A payment transaction method according to claim 1, said method comprising the steps of:
- sending a first message (102; 202; 302) from said user terminal (TU1; TU2; TU3) to said agent terminal (TA1; TA2, TA3) over a distrusted first connection, said first message (102; 202; 302) containing a first encrypted portion and a non-encrypted portion comprising a temporary user identification whose usage is restricted to a single payment transaction, and a user provider identification;
- authenticating said agent terminal (TA1; TA2; TA3) by an agent provider server (ACSA1; ACSA2; ACSA3);
- sending a second message (103; 203; 303) from said agent terminal (TA1; TA2; TA3) to said agent provider server (ACSA1; ACSA2; ACSA3) over a secure second connection, said second message (103; 203; 303) containing said first encrypted portion, said temporary user identification and said user provider identification;
- sending a third message (104; 204; 304) from said agent provider server (ACSA1; ACSA2; ACSA3) to a user provider server (ACSU1; ACSU2; ACSU3) over a secure third connection, said third message (104; 204; 304) comprising said first encrypted portion and said temporary user identification;
- decrypting said first encrypted portion by said user provider server (ACSU1; ACSU2; ACSU3) thereby generating decrypted data;
- sending a fourth message (105; 205; 305) from said user provider server (ACSU1; ACSU2; ACSU3) to said user terminal (TU1; TU2; TU3) over a secure fourth connection, said fourth message (105; 205; 305) containing a second encrypted portion comprising at least part of said decrypted data;
- decrypting said second encrypted portion by said user terminal (TU1; TU2; TU3) and verifying said at least part of said decrypted data; and
- authenticating said transaction by said user provider server (ACSU1; ACSU2; ACSU3).

3. A payment transaction method according to claim 2,
wherein said first message (102; 202; 302) further contains information indicative for an amount of money involved in said payment transaction.

4. A payment transaction method according to claim 2,
wherein said second message (103; 203; 303) further contains an agent terminal identification.

5. A payment transaction method according to claim 2,
wherein said third message (104; 204; 304) further contains location information of said agent terminal (TA1; TA2; TA3); and
wherein authenticating said transaction involves verifying the location of said user terminal (TU1; TU2; TU3) against said location information of said agent terminal (TA1; TA2; TA3).

6. A payment transaction method according to claim 2,
wherein said third message (104; 204; 304) further contains business descriptive information of an agent exploiting said agent terminal (TA1; TA2; TA3); and
wherein said fourth message (105; 205; 305) further contains said business descriptive information of said agent.

7. A payment transaction method according to claim 2,
wherein said third message (104; 204; 304) further contains information indicative for a fee charged by said agent provider on said transaction; and
wherein said fourth message (105; 205; 305) further contains information indicative for said fee charged by said agent provider on said transaction and a fee charged by said user provider on said transaction.

8. A payment transaction method according to claim 2,
wherein said first encrypted portion consists of an Identity Based Encryption generated using a public key of said user provider, said Identity Based Encryption further comprising a parameter aP generated by a random number a processed with a public parameter P that represents a known point on a known elliptic curve; and
wherein decrypting said first encrypted portion by said user provider server (ACSU1; ACSU2; ACSU3) involves using a private key of said user provider.

9. A payment transaction method according to claim 8,
wherein said second encrypted portion consists of an Identity Based Encryption generated using a public key of said user, said Identity Based Encryption comprising said parameter aP; and
wherein decrypting said second encrypted portion by said user terminal (TU1; TU2; TU3) involves using a private key of said user for verification to thereby authenticate said user provider server (ACSU1; ACSU2; ACSU3) by said user terminal (TU1; TU2; TU3).

10. A payment transaction method according to claim 2,
wherein said second encrypted portion consists of an Identity Based Encryption generated using a public key of said user, said Identity Based Encryption further comprising a parameter bP generated by a random number b processed with a public parameter P that represents a known point on a known elliptic curve; and
- decrypting said second encrypted portion by said user terminal (TU1; TU2; TU3) involves using a private key of said user.

11. A payment transaction method according to claim 9,
wherein authenticating said user terminal (TU1; TU2; TU3) by said user provider server (ACSU1; ACSU2; ACSU3) involves:
- sending a fifth message (106b; 206b; 306b) from said user terminal (TU1; TU2; TU3) to said user provider server (ACSU1; ACSU2; ACSU3), said fifth message (106b; 206b; 306b) containing a third encrypted portion consisting of an Identity Based Encryption using a public key of said user provider, said Identity Based Encryption containing said parameter bP; and
- decrypting said third encrypted portion by said user provider server (ACSU1; ACSU2; ACSU3) using a private key of said user provider for verification.

12. A user terminal client application adapted to perform the payment transaction method according to claim 1.

13. An agent terminal client application adapted to perform the payment transaction method according to claim 1.

14. A user provider server application adapted to perform the payment transaction method according to claim 1.

15. An agent provider server application adapted to perform the payment transaction method according to claim 1.
